# EUROPEAN PATENT SPECIFICATION

(11) **EP 4 178 131 B1**
(45) Date of publication and mention of the grant of the patent: **10.07.2024**
(21) Application number: 21206265.7
(22) Date of filing: 03.11.2021
(51) Int. Cl.: H04J 14/02, H04Q 11/00, H04L 12/28

(54) **METHOD FOR ESTABLISHING AND/OR FOR PROVIDING AN OPTICAL DATA TRANSMISSION-BASED CONNECTION BETWEEN A FIRST LOCATION, VIA AT LEAST ONE OPTICAL DATA TRANSMISSION FIBER, TO AN OPTICAL DATA TRANSMISSION FUNCTIONALITY OF A TELECOMMUNICATIONS NETWORK, OPTICAL SAFETY AND POLICY ENTITY OR FUNCTIONALITY, BACKBONE NETWORK, AGGREGATION NETWORK OR TELECOMMUNICATIONS NETWORK, SYSTEM, PROGRAM AND COMPUTER-READABLE MEDIUM**
VERFAHREN ZUR HERSTELLUNG UND/ODER BEREITSTELLUNG EINER AUF DER UMWANDLUNG VON OPTISCHEN DATEN BASIERENDEN VERBINDUNG ZWISCHEN EINEM ERSTEN STANDORT, ÜBER MINDESTENS EINE OPTISCHE DATENÜBERTRAGUNGSFASER, AN EINE OPTISCHE DATENÜBERTRAGUNGSFUNKTIONALITÄT EINES TELEKOMMUNIKATIONSNETZWERKS, EINE OPTISCHEN SICHERHEITS- UND RICHTLINIENENTITÄT ODER -FUNKTIONALITÄT, BACKBONE-NETZWERK, AGGREGATIONSNETZWERK ODER TELEKOMMUNIKATIONSNETZWERK, SYSTEM, PROGRAMM UND COMPUTERLESBARES MEDIUM
PROCÉDÉ POUR ÉTABLIR ET/OU FOURNIR UNE CONNEXION BASÉE SUR LA TRANSMISSION DE DONNÉES OPTIQUES ENTRE UN PREMIER EMPLACEMENT, PAR L'INTERMÉDIAIRE D'AU MOINS UNE FIBRE DE TRANSMISSION DE DONNÉES OPTIQUES, À UNE FONCTIONNALITÉ DE TRANSMISSION DE DONNÉES OPTIQUES D'UN RÉSEAU DE TÉLÉCOMMUNICATIONS, ENTITÉ OU FONCTIONNALITÉ DE SÉCURITÉ ET DE POLITIQUE, RÉSEAU DORSAL, RÉSEAU D'AGRÉGATION OU RÉSEAU DE TÉLÉCOMMUNICATIONS, SYSTÈME, PROGRAMME ET SUPPORT LISIBLE PAR ORDINATEUR

(43) Date of publication of application: 10.05.2023
(73) Proprietor: Deutsche Telekom AG, 53113 Bonn (DE)
(72) Inventor: HAAG, Thomas, 63110 Rodgau (DE); WEIERSHAUSEN, Werner, 64859 Eppertshausen (DE)
(74) Representative: Schwöbel, Thilo K.

(56) References cited:
- WO-A1-2009/095416
- WO-A1-2011/067350
- CA-A1- 3 063 688
- FRANCESCO PAOLUCCI ET AL: "Enabling transparent lambda services between metro and core networks", PHOTONIC NETWORK COMMUNICATIONS, KLUWER ACADEMIC PUBLISHERS, BO, vol. 23, no. 2, 6 December 2011 (2011-12-06), pages 137 - 147, XP035027605, ISSN: 1572-8188, DOI: 10.1007/S11107-011-0344-9
- MAIER M ET AL: "STARGATE: the next evolutionary step toward unleashing the potential of WDM EPONs [Topics in Optical Communications]", IEEE COMMUNICATIONS MAGAZINE, IEEE SERVICE CENTER, PISCATAWAY, US, vol. 45, no. 5, 1 May 2007 (2007-05-01), pages 50 - 56, XP011381850, ISSN: 0163-6804, DOI: 10.1109/MCOM.2007.358848

## Description

### BACKGROUND

The present invention relates to a method for establishing and/or for providing an optical data transmission-based connection between a first location, via at least one optical data transmission fiber, to an optical data transmission functionality of a telecommunications network in order to enable to feed or input a user-defined optical signal and/or an optical initialization signal to the optical data transmission fiber and towards the optical data transmission functionality of the telecommunications network, wherein the telecommunications network and/or the optical data transmission functionality comprises a backbone network and/or an aggregation network.

Furthermore, the present invention relates to an optical safety and policy entity or functionality for establishing and/or for providing an optical data transmission-based connection between a first location, via at least one optical data transmission fiber, to an optical data transmission functionality of a telecommunications network, wherein the optical safety and policy entity or functionality is configured to receive a user-defined optical signal and/or an optical initialization signal fed or input to the optical data transmission fiber.

Additionally, the present invention relates to a backbone network, aggregation network or telecommunications network for establishing and/or for providing an optical data transmission-based connection between a first location, via at least one optical data transmission fiber, to an optical data transmission functionality of a telecommunications network, the backbone network, aggregation network or telecommunications network comprising at least one optical safety and policy entity or functionality according to the present invention.

Additionally, the present invention relates to a system for establishing and/or for providing an optical data transmission-based connection between a first location, via at least one optical data transmission fiber, to an optical data transmission functionality of a telecommunications network, the system comprising at least one optical safety and policy entity or functionality according to the present invention.

Furthermore, the present invention relates to a program and to a computer-readable medium for establishing and/or for providing an optical data transmission-based connection between a first location to an optical data transmission functionality of a telecommunications network.

The exchange of information in broadband communication systems or telecommunications networks, both in fixed-line as in wireless communication systems (or fixed-line communication networks and mobile communication networks) has already grown dramatically and probably will also grow in the future due to the rapid spread of different data services in such communication networks.

In conventionally known or current telecommunications networks, typically having or comprising broadband access networks and/or aggregation networks that have or comprise central office points of delivery, many end-users or subscribers are connected to be provided with communication services and/or IP connectivity.

Typically in such broadband access networks, end-users or subscribers operate customer premises equipment or home gateway devices in order to establish a (mostly wireline) connection to access nodes of the broadband access network, typically as part of or located at a central office point of delivery.

At such access nodes and/or at the respective central office point of delivery, such communication services and/or IP connectivity are/is provided (to the end-users or subscribers) based on electrical or electronical processing and/or communication technology - hence, even in case the end-users or subscribers are connected to the access node or central office point of delivery using wireline optical data transmission links (such as, e.g., a passive optical network, PON), such end-user data, or, rather, the respective signals carrying these data (in uplink direction), are converted to and processed as electrical signals in the respective access node and/or the respective central office point of delivery, and - in case of a long-distance transmission requirement of at least a part of such (uplink) end-user data - optical signals are used to carry these end-user data, via a backbone part of the network and/or an aggregation part (or ring) of the network, towards other (typically faraway) network entities or network nodes.

According to such a mode of operation of conventionally known telecommunications networks, it might be possible to connect an end-user via an optical data transmission line (such as, e.g., via a passive optical network, PON, or also via a point-to-point optical transmission line), however the respective signals carrying the end-user's data (i.e. the end-user's data, in uplink direction, originating from the end-user's home gateway or customer premises equipment, as well as the end-user's data, in downlink direction, destinated to the end-user's home gateway or customer premises equipment) are necessarily processed as electrical signals by the respective access node and/or by the respective central office point of delivery through which the considered end-user is connected to the telecommunications network.

This also necessarily means, on the one hand, at least a twofold conversion from the optical domain towards the electrical domain and from the electrical domain towards the optical domain, and, on the other hand and as a consequence thereof, that it is impossible to transmit a user-defined optical signal between a first location connected to the telecommunications network towards a second location connected to the telecommunications network in a transparent manner without at least physically modifying the user-defined optical signal. A prior art document WO2009/095416 discloses a method of connection establishment between nodes in a transparent optical network. The switching of channels is achieved through wavelength selection switches, which are capable of adjusting the attenuation for each transmitted wavelength channel.

### SUMMARY

An object of the present invention is to provide a technically simple, effective and cost effective solution for establishing and/or for providing an optical data transmission-based (direct) connection between a (first) location, via at least one optical data transmission fiber, to an optical data transmission functionality of a telecommunications network in order to enable to feed or input a user-defined optical signal and/or an optical initialization signal to the optical data transmission fiber and towards the optical data transmission functionality of the telecommunications network. A further object of the present invention is to provide a corresponding optical safety and policy entity or functionality, a corresponding broadband access network, aggregation network or telecommunications network, and a corresponding system.

The object of the present invention is achieved by a method for providing an optical data transmission-based connection between a first location, via at least one optical data transmission fiber, to an optical data transmission functionality of a telecommunications network in order to enable to feed or input a user-defined optical signal and/or an optical initialization signal to the optical data transmission fiber and towards the optical data transmission functionality of the telecommunications network, wherein the optical data transmission functionality comprises an aggregation network, wherein the optical data transmission fiber is connected to an optical safety and policy entity or functionality that connects the first location to the aggregation network, characterized in that the optical safety and policy entity or functionality realizes a protection-- of the optical transmission functionality of the telecommunications network with regard to the aggregation network, and/or of functionalities of the optical safety and policy entity or functionality , wherein the method comprises the following steps:
-- in a first step, the user-defined optical signal and/or the optical initialization signal is fed or input, at the first location, to the optical data transmission fiber,
-- in a second step, the optical transmission functionality of the telecommunications network and/or the functionalities of the optical safety and policy entity or functionality are protected by means of the optical safety and policy entity or functionality attenuating the user-defined optical signal and/or the optical initialization signal received from the first location via the optical data transmission fiber, wherein the optical safety and policy entity or functionality comprises, for realizing the protection, a variable optical attenuator functionality, wherein the power of the user-defined optical signal and/or of the optical initialization signal is limited, by the variable optical attenuator functionality, and thereby the optical transmission functionality of the telecommunications network and/or the functionalities of the optical safety and policy entity or functionality protected, wherein the variable optical attenuator functionality comprises a first variable optical attenuator device and at least a second variable optical attenuator device, wherein the first variable optical attenuator device allows for a comparatively fast attenuation or shutdown of the user-defined optical signal and/or of the optical initialization signal transmitted to the telecommunications network and allows for a comparatively coarse optical attenuation in terms of spectral width and/or resolution, and wherein the second variable optical attenuator device corresponds to a more fine-granular variable optical attenuator device in terms of spectral width and/or resolution.

It is thereby advantageously possible according to the present invention to initiate or set up the optical data transmission-based connection between the considered (first) location - via the at least one optical data transmission fiber - to the optical data transmission functionality of the telecommunications network, and to be able to feed or input the user-defined optical signal and/or the optical initialization signal to the optical data transmission fiber to be received by the optical safety and policy entity or functionality, and, if applicable, to forward the user-defined optical signal towards the optical data transmission functionality of the telecommunications network.

Hence according to the present invention, the optical safety and policy entity or functionality realizes or by means of the optical safety and policy entity or functionality it is possible to realize a direct optical communication link (i.e. an optical data transmission-based connection) to be established between, on the one hand, the location (or first location), especially a user-defined optical transmitter hardware, and, on the other hand, the optical data transmission functionality of the telecommunications network, i.e. especially involving a backbone network and/or an aggregation network (and/or an access network) of the telecommunications network.

According to the present invention, it is especially advantageous that the optical safety and policy entity or functionality realizes a protection of the optical transmission functionality of the telecommunications network (especially with regard to the backbone network and/or the aggregation network and the respective infrastructure such as optical network nodes and/or optical (fiber) transmission equipment) and/or of functionalities (or components or entities) of the optical safety and policy entity or functionality (itself). In order to realize such a protection functionality, the optical safety and policy entity or functionality is configured such that an attenuation of (and/or comprises means for attenuating) the user-defined optical signal and/or the optical initialization signal, after receiving or having received the user-defined optical signal and/or the optical initialization signal (i.e. after it being fed or input, at the first location, to the optical data transmission fiber) is possible in a sufficiently short period of time or time interval (i.e. in a first step, the user-defined optical signal and/or the optical initialization signal is fed or input, at the first location, to the optical data transmission fiber, and, in a second step (subsequent to the first step), the optical transmission functionality of the telecommunications network and/or the functionalities of the optical safety and policy entity or functionality are protected by means of, if applicable or necessary, attenuating the user-defined optical signal and/or the optical initialization signal).

According to one embodiment or alternative implementation of the present invention, just one (or: at least one) location is (directly) connected, via the at least one optical data transmission fiber and via the optical safety and policy entity or functionality, to the optical data transmission functionality of the telecommunications network; that is why, at some instances of the present specification, the terms "a (first) location" or "the (first) location" are used, with 'first' in brackets. However, of course, one of the main aspects according to the present invention (but not the only aspect) is to connect the first location (via the optical data transmission fiber and the optical safety and policy entity or functionality) (directly) to the optical data transmission functionality of the telecommunications network in view of also having a second location (especially directly) connected to the telecommunications network and to provide for an optical point-to-point connection or transmission between the first and second location.

Especially, such a transmission or transmission solution between the first and second location provides for a transmission of the user-defined optical signal, through the telecommunications network and all its considered network nodes, in an essentially unmodified manner, i.e. the user-defined optical signal - transported or transmitted in the direction from the first location to the second location, and transmitted by an optical hardware device at the first location - is able to be received, by means of a further optical receiver hardware at the second location, essentially as it has been transmitted or sent, i.e. especially it is received, e.g. using the same optical modulation scheme, as it was transmitted.

By means of using, regarding the considered (e.g. first) location, the optical safety and policy entity or functionality, it is advantageously possible to connect the considered location (e.g., the first location, or, the respective optical data transmission fiber) more or less directly to the optical domain of the telecommunications network, i.e. especially the aggregation network and/or the backbone network, and thereby to provide for an all-optical (or at least almost all-optical) transmission link towards the telecommunications network (especially between the first and second location), and, likewise, in opposite direction (especially from the second location to the first location). The protecting functionality of the optical safety and policy entity or functionality as well as the policy decision and policy enforcement functionalities ensure that the telecommunications network is protected and the communication or connectivity service is used according to agreed service level agreements, SLA, especially regarding the optical spectral width used by the optical signal.

Preferably according to the present invention, such protection also applies regarding the optical initialization signal, and especially is applied generally or continuously; this feature being especially important as third-party (customer-defined) hardware is used at the ends of the first and/or second optical data transmission fibers (i.e. at the first and second locations) that the operator of the telecommunications network does not necessarily control.

For example, it is advantageously possible according to the present invention to provide an optical service between the first and second location of the telecommunications network in the form of a so-called lambda-service, especially for business customers of the telecommunications network (especially while still providing end-user communication services and/or IP connectivity to a multitude of end-users using the same backbone network and/or aggregation network infrastructure of the telecommunications network). Such business customers are often other carriers (i.e. operators of other telecommunications networks) within wholesale contracts, such as, e.g., 5G mobile network operators, MNO, who could use lambda services as transport enablers, e.g. for mobile front- and backhaul. According to the present invention, a lambda service allows for the freedom of the user to produce any kind of protocol or bandwidth (between the first and second location, i.e. the user-defined optical signal is completely user-defined and the operator of the transport telecommunications network (providing the forwarding of the user-defined optical signal between the first and second location) only provides the - especially all-optical - transmission or forwarding functionality (between the first and second location) without interfering and/or imposing conditions regarding the user-defined optical signal other than conditions such as to assure the functionality and to avoid damage to the optical transmission network of the telecommunications network). Furthermore, according to the present invention, it is advantageously possible to comparatively easily initiate or set up - by means of the optical initialization signal - the optical data transmission-based connection between the considered (first) location to the optical data transmission functionality of the telecommunications network, and especially to comparatively easily initiate or set up the optical point-to-point transmission between the first and second location. Hereinafter, the initiation is also called first sign of life or first sign of life procedure: The first sign of life comes from the customer, i.e. the optical initialization signal is fed to or input to the optical data transmission fiber (hereinafter also called first optical data transmission fiber) at the (first) location.

It is advantageously possible according to the present invention that the customer may plug any device and may inject any light or signal into a "dark fiber end" (i.e. the (first) optical data transmission fiber) at its premises location at the (first) location (or at whatever location a dark fiber end of the network operator who offers the lambda or spectrum services is available).

According to the present invention, the optical initialization signal is fed or input, in a first step, to the (first) optical data transmission fiber. In a second step, the optical initialization signal is received by the optical safety and policy entity or functionality of the telecommunications network, and the identity of or associated to the optical initialization signal is determined by the optical safety and policy entity or functionality. In a third step, dependent on the determined identity of the optical initialization signal, the communication or connectivity service between the first location and the second location is activated. According to the present invention, it is advantageously possible that any physical property of the optical initialization signal (such as, e.g., the wavelength, the spectrum width, the intensity, or the behavior of the optical initialization signal over time) is potentially able to be used to determine the identity and/or the validity of the optical initialization signal and/or of the customer.

Furthermore, according to the present invention, it is advantageously possible to provide the communication or connectivity service (or lambda service) as a complement to service offerings at the IP layer (i.e. providing end-user communication services and/or IP connectivity). Especially, the lambda service provides for a free transmission of any possible protocol without principal technical limitations by the network elements used by the host (hosting carrier), i.e. the transporting telecommunications network. As the carrier (i.e. the telecommunications network) still needs control, the present invention provides a solution to support such unlimited lambda services with comprehensive control options by the host telecommunications network.

According to the present invention, it is furthermore advantageously possible that the customer of the lambda service (i.e. the user feeding or inputting the user-defined optical signal at the first location and receiving it at the second location) is able to use their own optical interfaces (transmitter and receiver) while the service provider (i.e. the telecommunications network) only supplies the fiber network for optical interconnection, typically in a defined optical spectral range or optical window.

According to the present invention, there are different modes of operation, especially regarding how the (first) location is connected to the telecommunications network, or its aggregation network infrastructure and/or backbone network infrastructure:
-- according to a first mode, a passive fiber network is used, e.g. the network provider (i.e. the telecommunications network) supplies a fiber link or a fiber network (e.g. PON tree network);
-- according to a second mode, an active fiber-optical network is used, e.g. the network provider (i.e. the telecommunications network) supplies an amplified and channelizable (optical) network, i.e. a WDM network (wavelength division multiplex network) with optical amplifiers and spectral filters, maybe even switchable optical nodes (ROADMs, reconfigurable optical add drop multiplexers).

It is furthermore advantageously possible according to the present invention that the optical signal (i.e. the user-defined optical signal) being delivered by the customer (of the telecommunications network) itself can be used as agnostic underlay layer for any other higher-layer protocols on top (e.g. for Layer 1/OTN services, for Layer 2/Ethernet services, for Layer 3/IP services and/or SD-WAN (software defined wide area network)/OTT (over the top) or else). Furthermore, it is advantageously possible according to the present invention that the end-to-end lambda service is managed by a disaggregated architecture, including several user plane (UP) and control plane (CP) functional building blocks that are placed especially at central office points of delivery (PODs), at network elements along the service route, at hierarchical controller and orchestrator entities and OSS/BSS entities.

The telecommunications network according to the present invention might be a fixed-line telecommunications network or a mobile communication network but could also have both aspects, i.e. parts of a fixed-line telecommunications network (or being a fixed-line telecommunications network in such parts) and parts of a mobile communication network (or being a mobile communication network in such parts); such networks are also known under the term fixed-mobile-convergence networks (FMC networks).

Furthermore, it is advantageously possible and preferred according to the present invention that the optical safety and policy entity or functionality realizes - besides the protection of the optical transmission functionality of the telecommunications network and/or of functionalities of the optical safety and policy entity or functionality - a policy decision functionality, and/or a policy enforcement functionality regarding the user-defined optical signal and/or the optical initialization signal.

It is thereby advantageously possible that the policy decision and policy enforcement functionalities of the optical safety and policy entity or functionality ensure that the communication or connectivity service is used according to agreed service level agreements, SLA, especially regarding the optical spectral width used by the optical signal.

Furthermore, according to the present invention the optical safety and policy entity or functionality comprises, for realizing the protection, a variable optical attenuator functionality, wherein the power of the user-defined optical signal and/or of the optical initialization signal is limited or able to be limited, by the variable optical attenuator functionality, and thereby the optical transmission functionality of the telecommunications network and/or the functionalities of the optical safety and policy entity or functionality protected,
wherein especially the variable optical attenuator functionality is or corresponds to a frequency-selective optical attenuator functionality, especially is able to be adjusted in a frequency-dependent manner, resulting in an adjustable attenuation spectrum and different frequency-dependent attenuations for the user-defined optical signal and potentially other optical signals on the optical data transmission fiber,
wherein the variable optical attenuator functionality comprises a first variable optical attenuator device and at least a second variable optical attenuator device, wherein the first variable optical attenuator device allows for a comparatively fast attenuation or shutdown of the user-defined optical signal and/or of the optical initialization signal transmitted to the telecommunications network and/or allows for a comparatively coarse optical attenuation in terms of spectral width and/or resolution, and wherein the second variable optical attenuator device corresponds to a more fine-granular variable optical attenuator device in terms of spectral width and/or resolution.

Thereby, it is advantageously possible to easily and effectively implement the inventive method.

Furthermore, it is advantageously possible and preferred according to the present invention that
-- the optical safety and policy entity or functionality as well as
-- a further optical safety and policy entity or functionality, the further optical safety and policy entity or functionality linking a second location via a second optical data transmission fiber to the telecommunications network, is used to initialize and/or to operate a communication or connectivity service between the first location and at least the second location based on optical data transmission of the user-defined optical signal and/or the optical initialization signal, wherein especially the telecommunications network and its infrastructure is used to both
-- provide end-user communication services and/or IP connectivity to a multitude of end-users connected to an access network of the telecommunications network, and
-- connect the first location and the at least second location by means of at least access network infrastructure and/or aggregation network infrastructure comprising a plurality of optical network nodes,
wherein especially, between the first and second location, the telecommunications network comprises a transmission functionality regarding the backbone network and/or aggregation network and/or the access network that is based exclusively or almost exclusively on optical data transmission.

It is thereby advantageously possible to initiate the communication or connectivity service between the first and second location without the need of any parallel control plane connectivity between a (customer-defined) optical transmitting hardware located at the first location and the optical safety and policy entity or functionality.

That the communication or connectivity service between the first and second location, or the corresponding transmission functionality, is based exclusively or almost exclusively on optical data transmission refers to there being no substantial conversion of the optical signals into the electrical domain, and if yes at most for regeneration purposes of the optical signal; that there is no substantial conversion (or no conversion at all) of the optical signals into the electrical domain is the case if all-optical regenerators (or all-optical repeaters) are used for the regeneration of the optical signal but also in case that an optical signal (that is to be transmitted through the telecommunications network, especially at or between two network nodes) needs to be regenerated at a specific position along the transmission path and furthermore in case that such a specific regeneration of the optical signal requires an electrical conversion of the optical signal (and, thereafter, a back conversion to the regenerated optical signal by means of using an optical-electrical-optical regenerator or repeater).

In other words, the telecommunications network especially comprises a transmission functionality regarding the backbone network and/or aggregation network and/or the access network such that the user-defined optical signal is characterized by an optical modulation scheme, wherein a transmission path between the first location and the second location comprises an optical transmission path comprising the first optical data transmission fiber and the second optical data transmission fiber, and wherein the transmission functionality is arranged such that the optical modulation scheme is maintained throughout the optical transmission path,
wherein especially the transmission path is identical with the optical transmission path. By means of maintaining the optical modulation scheme throughout the transmission path of the user-defined optical signal, it is advantageously possible that the user-defined optical signal is received, at the second location, as it is (or has been) fed or input at the first location, i.e. essentially without (necessarily) being modified between the first and second location.

Furthermore, it is advantageously possible and preferred according to the present invention that the broadband access network comprises at least one central office point of delivery comprising or being coupled with the optical safety and policy entity or functionality,
wherein especially the central office point of delivery connects the first location and/or the first optical data transmission fiber to the telecommunications network, especially its transmission functionality,
wherein especially the broadband access network comprises a further central office point of delivery that connects the second location and/or the second optical data transmission fiber to the telecommunications network, especially its transmission functionality,
wherein especially thereby the communication or connectivity service between the first location and the second location is able to be realized as an optical and transparent user plane point-to-point connection.

Thereby, it is advantageously possible to easily and effectively implement the inventive method.

According to a further preferred embodiment of the present invention, determining the identity of the optical initialization signal and/or of the further optical initialization signal is based on determining the or at least part of the physical properties of the initialization signal and/or of the further initialization signal, and especially involves determining one or a plurality of the following:
-- the spectrum of the initialization signal and/or of the further initialization signal,
-- the amplitude or the power of the initialization signal and/or of the further initialization signal,
-- a time stamp information of the initialization signal and/or of the further initialization signal,
-- an identity information, especially as a pilot tone, especially a low frequency modulation, or as pilot frequency, of the initialization signal and/or of the further initialization signal.

It is thereby advantageously possible to comparatively easily and efficiently determine the identity of the optical initialization signal (and/or of the further optical initialization signal) by means of analyzing, regarding the initially incoming light (i.e. the (further) optical initialization signal), its spectrum, amplitude/power, time stamps, topological information (such as which fiber and/or which port is used). These data are especially able to be compared with data of a business support system, BSS, or data base.

According to a further embodiment of the present invention, the first location is connected to the central office point of delivery, via the first optical data transmission fiber, using at least one of the following:
-- a passive optical fiber as a point-to-point link,
-- an active optical fiber, i.e. optically amplified,
-- a passive optical network, especially a PON,e.g. XGS-PON, PON-tree or a part thereof.

Thereby, it is advantageously possible to use different possible optical connections of the first and/or second location to the telecommunications network, especially its backbone network and/or aggregation network infrastructure.

Furthermore, the present invention relates to an optical safety and policy entity or functionality for providing an optical data transmission-based connection between a first location, via at least one optical data transmission, to an optical data transmission functionality of a telecommunications network, wherein the optical data transmission functionality comprises an aggregation network, wherein the optical data transmission fiber is connected to the optical safety and policy entity or functionality that connects the first location to the aggregation network optical data transmission functionality of the telecommunications network , wherein the optical safety and policy entity or functionality is configured to receive a user-defined optical signal and/or an optical initialization signal fed or input to the optical data transmission fiber. The optical safety and policy entity or functionality is configured or comprises means to realize a protection
-- of the optical transmission functionality of the telecommunications network with regard to the aggregation network, and/or
-- of functionalities of the optical safety and policy entity or functionality, wherein the optical safety and policy entity or functionality is configured such that the optical transmission functionality of the telecommunications network and/or functionalities of the optical safety and policy entity or functionality are protected by means of the optical safety and policy entity or functionality attenuating the user-defined optical signal and/or the optical initialization signal received by the optical safety and policy entity or functionality received from the first location via the optical data transmission fiber, wherein the optical safety and policy entity or functionality comprises, for realizing the protection, a variable optical attenuator functionality, wherein the variable optical attenuator functionality is configured to limit the power of the user-defined optical signal and/ or of the optical initialization signal and thereby protect the optical transmission functionality of the telecommunications network and/or the functionalities of the optical safety and policy entity or functionality , wherein the variable optical attenuator functionality comprises a first variable optical attenuator device and at least a second variable optical attenuator device, wherein the first variable optical attenuator device allows for a comparatively fast attenuation or shutdown of the user-defined optical signal and/or of the optical initialization signal transmitted to the telecommunications network and allows for a comparatively coarse optical attenuation in terms of spectral width and/or resolution, and wherein the second variable optical attenuator device corresponds to a more fine-granular variable optical attenuator device in terms of spectral width and/or resolution.

Furthermore, it is preferred, especially with respect to the optical safety and policy entity or functionality, that the optical safety and policy entity or functionality comprises a splitter entity or functionality and an optical detection entity or functionality, especially as a first entry towards the telecommunications network of the user-defined optical signal and/or the optical initialization signal being fed to the first optical data transmission fiber, wherein by means of the splitter entity or functionality, a measuring signal of the optical power of the user-defined optical signal and/or the optical initialization signal is branched off towards the optical detection entity or functionality,
wherein especially by means of the optical detection entity or functionality, the branched off part of the user-defined optical signal and/or of the optical initialization signal is analyzed, especially by means of decomposing the branched off part of the user-defined optical signal and/or of the optical initialization signal into spectral components, especially by means of using, e.g., an arrayed waveguide grating or alternative filter device as part of the optical safety and policy entity or functionality or by means of using a channel indicator and/or a channel power measurement entity as part of the optical safety and policy entity or functionality.

Furthermore, it is preferred, especially with respect to the optical safety and policy entity or functionality, that the optical safety and policy entity or functionality comprises an optical policy enforcement entity or functionality, wherein the measurements performed and/or the analysis results obtained by the optical detection entity or functionality are provided to the optical policy enforcement entity or functionality that especially comprises a variable optical attenuator able to limit the spectral position, the spectral width and/or the allowed signal amplitude of the user-defined optical signal, wherein especially from the measured optical parameters, service properties are calculated, especially the bandwidth or optical bandwidth or spectral width that the user-defined optical signal and/or the optical initialization signal is able to use,
wherein especially the service properties are related to the respective service level agreement, SLA.

Furthermore, the present invention relates to a backbone network, aggregation network or telecommunications network for establishing and/or for providing an optical data transmission-based connection between a first location, via at least one optical data transmission fiber, to an optical data transmission functionality of a telecommunications network, the backbone network, aggregation network or telecommunications network comprising at least one optical safety and policy entity or functionality according to the present invention.

Furthermore, the present invention relates to a system for establishing and/or for providing an optical data transmission-based connection between a first location, via at least one optical data transmission fiber, to an optical data transmission functionality of a telecommunications network, the system comprising at least one optical safety and policy entity or functionality according to the present invention.

Still additionally, the present invention relates to a program comprising a computer readable program code which, when executed on a computer and/or on a network node of a telecommunications network and/or on an optical safety and policy entity or functionality, causes the computer and/or the network node of the telecommunications network and/or the optical safety and policy entity or functionality to perform the inventive method.

Furthermore, the present invention relates to a computer-readable medium comprising instructions which when executed on a computer and/or on a network node of a telecommunications network and/or on an optical safety and policy entity or functionality, causes the computer and/or the network node of the telecommunications network and/or the optical safety and policy entity or functionality to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically shows exemplarily an optical safety and policy entity or functionality or a central office point of delivery comprising the optical safety and policy entity or functionality.
Figure 2 schematically shows a telecommunications network providing a communication or connectivity service between a first location and a second location based on optical data transmission of a user-defined optical signal, the telecommunications network comprising a backbone network and/or an aggregation network as well as an access network.
Figure 3 schematically shows in greater detail the first location and its connection to the telecommunications network.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order; this is especially the case for the terms "first step", "second step", etc. It is to be understood that the terms so used are interchangeable under appropriate circumstances and that the embodiments of the invention described herein are capable of operation in other sequences than described or illustrated herein.

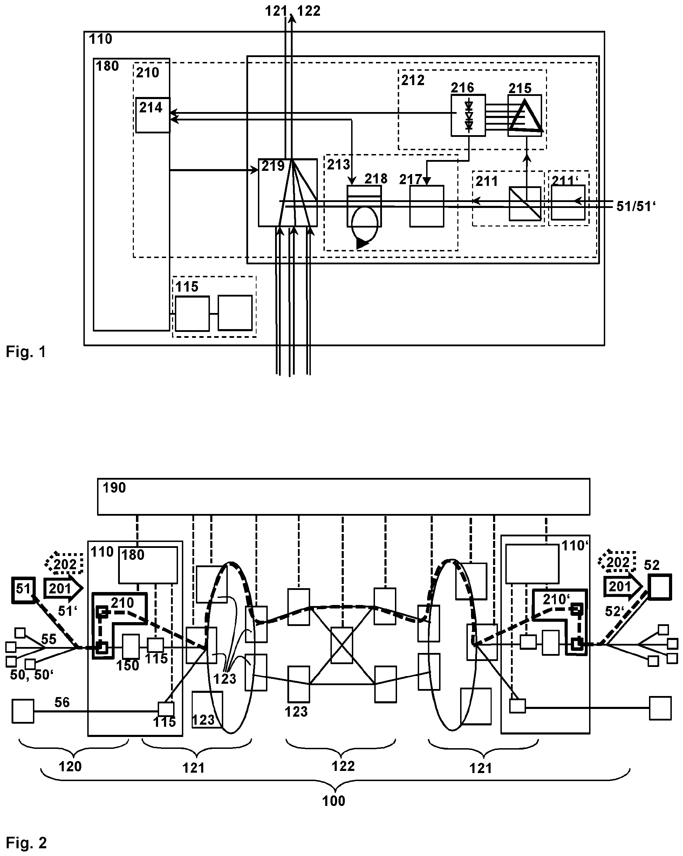

In Figure 2, a telecommunications network 100 according to the present invention is schematically shown. The telecommunications network 100 comprises, especially as part of a backbone network 122 and/or as part of an aggregation network 121 a plurality of optical network nodes 123 or optical nodes 123, providing a transmission functionality based on optical data transmission. Preferably, user equipments or client devices (not specifically represented in Figure 2) are able to be connected to the telecommunications network 100 by means of a (broadband) access network 120 (as part of the telecommunications network 100 or associated or assigned to it), the broadband access network 120 especially comprising, at least one logical or physical central office point of delivery 110 that is preferably realized within a (mini) data center and that is especially handling different access requirements, especially different access possibilities, of the client devices to network functionalities provided by the telecommunications network 100 or via the telecommunications network 100. The client devices are typically connected to the logical or physical central office point of delivery 110 by means of a customer premises equipment device 50, 50' or by means of a customer premises equipment functionality that might be built into or realized by the client devices.

Figure 2 schematically shows the telecommunications network 100 providing a communication or connectivity service between a first location 51 and a second location 52 based on optical data transmission of a user-defined (and/or user plane) optical signal 201 through the backbone network 122 and/or the aggregation network 121 as well as the access network 120 along a path that the (user plane) optical signal 201 takes from the first location 51 to the second location 52 through the telecommunications network 100; this path is schematically indicated by means of a bold dashed line in Figure 2. Furthermore, the telecommunications network 100 comprises a network orchestrator 190. The first location 51 is especially linked to the telecommunications network 100 by means of at least one first optical data transmission fiber 51', and the second location 52 is linked to the telecommunications network 100 by means of at least one second optical data transmission fiber 52'. In Figure 2, the case is schematically shown that also a further optical signal 202 (travelling, or being transmitted, in opposing direction compared to the optical signal 201) takes the same path as schematically shown for the optical signal 201. However, this is not always mandatorily realized: Both the backbone network 122 and also aggregation networks 121 are schematically shown as comprising a plurality of optical network nodes 123, and, typically, there are different paths through the telecommunications network 100 or its infrastructure that are possible between any of the optical nodes, and the further optical signal 202 might well travel (or be transmitted) using a different path from the path of the user-defined optical signal 201.

Furthermore according to the present invention, the broadband access network 120 comprises an optical safety and policy entity or functionality 210 connecting the first location 51 and/or the first optical data transmission fiber 51' to the telecommunications network 100, especially to its aggregation network 121 and/or its backbone network 122, wherein the optical safety and policy entity or functionality 210 especially provides for a protection of the optical transmission functionality (especially with regard to the backbone network 122 and/or the aggregation network 121), for a policy decision functionality, and for a policy enforcement functionality regarding the user-defined optical signal 201. Likewise, typically, the broadband access network 120 comprises a further optical safety and policy entity or functionality 210' connecting the second location 52 and/or the second optical data transmission fiber 52' to the telecommunications network 100, especially to its aggregation network 121 and/or its backbone network 122, wherein the further optical safety and policy entity or functionality 210' provides for a protection of the optical transmission functionality (especially with regard to the backbone network 122 and/or the aggregation network 121), for a policy decision functionality, and for a policy enforcement functionality regarding the further user-defined optical signal 202.

In the exemplary embodiment shown in Figure 2, the optical safety and policy entity or functionality 210 is co-located with the at least one central office point of delivery 110, and especially the central office point of delivery 110 comprises or is coupled with the optical safety and policy entity or functionality 210. Likewise in the exemplary embodiment shown in Figure 2, the further optical safety and policy entity or functionality 210' is co-located with a further central office point of delivery 110', and especially the further central office point of delivery 110' comprises or is coupled with the further optical safety and policy entity or functionality 210'. However, this symmetrical architecture (regarding the connection of the first and the second location 51, 52 to the telecommunications network 100) is only exemplarily shown in Figure 2, and the first location 51 is able to be linked to the telecommunications network 100 in a different manner compared to the second location 52.

As part of the central office point of delivery 110, an access node 150 is schematically shown; such access nodes 150 are typically used, as part of their respective central office points of delivery 110, 110', to connect end-users 50, 50' to the access network 120, and thereby to the telecommunications network 100.

Furthermore as part of the central office point of delivery 110, a switching fabric 115 (or, rather two instances of a switching fabric) is schematically shown in Figure 2. In Figure 2, the end-users 50, 50' are schematically shown as connected to the access network 120 by means of an optical communication link 55, especially a passive optical network, PON. Alternatively to using a passive optical network 55, a point-to-point connection 56, especially an optical point-to-point connection 56, is schematically shown in Figure 2. Furthermore as part of the central office point of delivery 110, an orchestrator entity or functionality 180 is schematically shown in Figure 2.

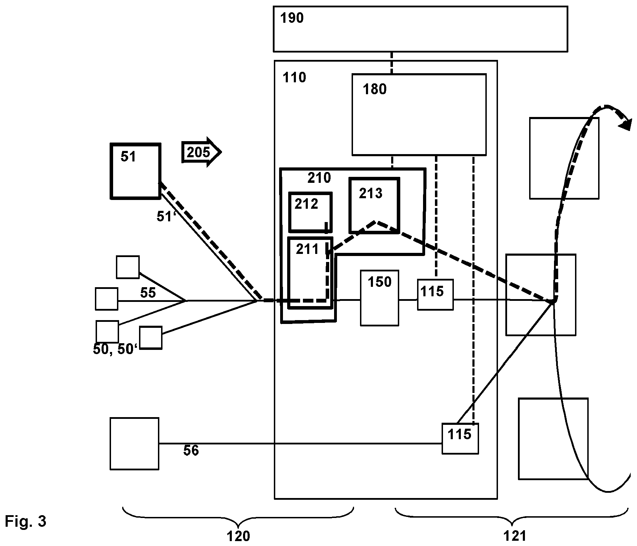

In Figure 3, the first location 51 and its connection to the telecommunications network 100 is schematically shown in greater detail. Again, the first location 51 is linked to the telecommunications network 100 by means of the first optical data transmission fiber 51'. And again, the broadband access network 120 comprises the optical safety and policy entity or functionality 210 connecting the first location 51 and/or the first optical data transmission fiber 51' to the telecommunications network 100. The optical safety and policy entity or functionality 210 provides for a protection of the optical transmission functionality, and especially also for a policy decision functionality as well as for a policy enforcement functionality regarding the user-defined optical signal 201. Again, in the exemplary embodiment shown in Figure 3, the optical safety and policy entity or functionality 210 is co-located with the at least one central office point of delivery 110. The optical safety and policy entity or functionality 210 especially comprises a splitter entity or functionality 211, an optical detection entity or functionality 212, and an optical policy enforcement entity or functionality 213.

Figure 3 furthermore schematically shows an initialization signal 205. The initialization signal 205 is fed or input to the first optical data transmission fiber 51' in order for the communication or connectivity service between the first and second location 51, 52 to be initiated. The user-defined optical signal 201 (and likewise the further user-defined optical signal 202) corresponds to an operative signal to be transmitted between the first and second location 51, 52. However, in order to establish the communication service (i.e. the user-defined optical signal 201 being operatively fed or input to the first optical data transmission fiber 51' and received at the second optical data transmission fiber 52'), the initialization signal 205 is fed or input to the first optical data transmission fiber 51'. The initialization signal 205 is detected by the optical safety and policy entity or functionality 210, and subsequently an optical and transparent user plane point-to-point connection is realized towards the transmission functionality of the telecommunications network 100, especially between the first and second location 51, 52. However, this communication or connectivity service is refused in case that the initialization signal 205 is invalid. Thereby, it is - inter alia - advantageously possible to protect the transmission functionality of the telecommunications network 100, especially with regard to the backbone network 122 and/or the aggregation network 121.

In Figure 1, the optical safety and policy entity or functionality 210 or the central office point of delivery 110 comprising the optical safety and policy entity or functionality 210 is schematically shown in greater detail. Again, the optical safety and policy entity or functionality 210 comprises the splitter entity or functionality 211 as the first entry (towards the telecommunications network 100) of the user-defined optical signal 201 (and/or of the optical initialization signal 205) being fed to the first optical data transmission fiber 51'. Alternatively according to the present invention (and schematically shown in Figure 1), the splitter entity or functionality 211 is not the first entry (towards the telecommunications network 100) of the user-defined optical signal 201 (and/or of the optical initialization signal 205) being fed to the first optical data transmission fiber 51', but a protective attenuator device 211' is provided as the first entry (towards the telecommunications network 100) of the user-defined optical signal 201 (and/or of the optical initialization signal 205). The protective attenuator device 211' provides for a comparatively fast attenuation or shutdown of the user-defined optical signal 201 and/or of the optical initialization signal 205 transmitted to the telecommunications network 100 and/or allows for a comparatively coarse optical attenuation in terms of spectral width and/or resolution.

By means of the splitter entity or functionality 211, a certain fraction (or measuring signal) of the optical power of the user-defined optical signal 201 (and/or of the optical initialization signal 205) is branched off towards the optical detection entity or functionality 212, such as, e.g., between 1% and 30% of the optical power, preferably between 3% and 20% of the optical power, more preferably between 5% and 10% of the optical power. By means of the optical detection entity or functionality 212, the branched off part of the user-defined optical signal 201 is analyzed, especially by means of decomposing the incoming light (i.e. the branched off part of the user-defined optical signal 201) into spectral components, especially by means of using an arrayed waveguide grating 215 or an alternative spectral filter and/or by means of using a channel indicator and/or channel power measurement entity 216. As part of the optical detection entity or functionality 212, a coarse channel function is able to be realized by means of a spectral differentiation of pre-configured channels; a fine or flexible spectral function is able to be realized by means of spectral decomposition of sub-channel-granular frequency components to address flexible lambda channels with different width in a flexgrid. These measurement results are provided to the optical policy enforcement entity or functionality 213 that comprises a variable optical attenuator 217 optionally an SLA-limiter and/or SLA-measurement entity 218. Thereby, it is advantageously possible to realizes an abstraction function: From the measured optical parameters, service properties are able to be calculated, especially the bandwidth or optical bandwidth (or spectral width) that the communication or connectivity service between the first and second location 51, 52 is able to use. Together with an optical policy decision function 214 (that is especially part of the control plane 180 (or orchestrator entity or functionality 180) of the central office point of delivery 110), the optical detection entity or functionality 212, and the optical policy enforcement entity or functionality 213 is able to provide for a translation of the service level agreement (SLA) into and optical parameter control: the SLA properties or parameters are translated top-down into physical control parameters of the optical channel or spectral window able to be used by the communication or connectivity service between the first and second location 51, 52. In case all conditions are fulfilled in order to transmit the user-defined optical signal 201 into the optical (backbone and/or aggregation) network, a switching entity 219, such as a ROADM (reconfigurable optical add drop multiplexer) is controlled or triggered to transmit the user-defined optical signal 201.

Hence, advantageously according to the present invention, an SLA control and the provision of (optical) network safety, as well as a managed optical service control (especially the prevention of alien wavelengths) is able to be realized by means of a policy decision and policy enforcement entity or functionality, provided by the optical safety and policy entity or functionality 210 and its components or entities, thereby especially also realizing a policy decision function, a policy enforcement function, and a network safety enforcement function (NSEF). The network safety enforcement function is especially required due to the fact that the network termination device (NT) is located at the customer premises, i.e. at the first location 51. The customer is enforced to apply their own optical module to align the fiber (i.e. the first optical data transmission fiber 51') by their own protocol and user plane traffic. Due to the free access to the optical plane of the fiber network (i.e. the aggregation and/or backbone network of the telecommunications network 100), the customer may also irradiate any laser light, either at a wavelength or at wavelengths that disturb(s) other lambda channels in the shared optical network or laser light with too high power (which may saturate optical amplifiers, and thus reducing their gain for all channels, so the optical transmission for all channels would be interrupted; or it could interfere with neighboring channels by non-linear crosstalk, e.g. by means of cross-phase multiplexing/XPM or four wave mixing /FWM). Hence, the network safety enforcement function protects the optical nodes of the telecommunications network 100 from unintended failures or misbehavior of customers (and from sabotaging attackers). A crucial problem for carriers to offer lambda services to customers is the difficulty to control and limit the usage of the optical lambda channels. This is similar to the offering of dark fiber to customers. In both cases the customer (in most cases a wholesale customer with own retail customers) is technically capable to use the basic physical resource of the carrier to perform any protocol and to transmit any bandwidth and to exploit any physical property for his own retail customers.

According to the present invention, the policy enforcement function limits the physical properties of the offered lambda channel by different technical sub devices that have a direct impact on these properties in a controlled manner. The customer (e.g. wholesale customer) concludes a contract with the carrier (i.e. the operator of the telecommunications network 100) on a certain service level agreement (SLA). The carrier uses the policy decision function (PDF) to measure properties of the optical lambda channel, in order to calculate abstracted service parameters therefrom and to compare them with the granted service SLA from the contract. The policy enforcement function (PEF) is composed by different elements to adjust the optical parameters of the traversing optical signal until the PDF and its SLA abstraction function correspond to each other. Especially, a direct control or an iterative loop of a control circuit is preferably implemented, such as a control loop of the following entities:
-- physical adjustment of one or more physical parameters,
-- measurement of the parameters,
-- abstraction to service parameters,
-- comparison with contract SLAs,
-- estimation of re-adjustable physical parameters by the offset (top-down-translation).

According to the present invention - and especially by means of using an optical safety and policy entity or functionality 210 -, an optical data transmission-based connection (especially a direct optical connection) is able to be established and/or provided between the first location 51 (i.e. typically a user-defined or customer-chosen optical transmitter hardware located there), via the at least one optical data transmission fiber 51', to the optical data transmission functionality of a telecommunications network 100 (i.e. the backbone network 122 and/or the aggregation network 121 (and/or the access network 120) via the optical safety and policy entity or functionality 210) in order to enable to feed or input the user-defined optical signal 201 and/or the optical initialization signal 205 to the optical data transmission fiber 51' and towards the optical data transmission functionality of the telecommunications network 100 - i.e. the optical safety and policy entity or functionality 210 connects the first location 51 and/or the first optical data transmission fiber 51' to the telecommunications network 100.

According to the present invention, the optical safety and policy entity or functionality 210 realizes a protection of the optical transmission functionality of the telecommunications network 100 (especially with regard to the backbone network 122 and/or the aggregation network 121) and/or of functionalities of the optical safety and policy entity or functionality 210, and the inventive method comprises - after a first step, of the user-defined optical signal 201 and/or the optical initialization signal 205 being fed or input, at the first location 51, to the optical data transmission fiber 51' - the second step of the optical transmission functionality of the telecommunications network 100 and/or the functionalities of the optical safety and policy entity or functionality 210 being protected by means of, if applicable or necessary, attenuating the user-defined optical signal 201 and/or the optical initialization signal 205.

According to the present invention, it is preferred that the optical safety and policy entity or functionality 210 realizes - besides the protection of the optical transmission functionality of the telecommunications network 100 and/or of functionalities of the optical safety and policy entity or functionality 210 - a policy decision functionality, and/or a policy enforcement functionality regarding the user-defined optical signal 201 and/or the optical initialization signal 205.

Furthermore, the optical safety and policy entity or functionality 210 comprises, for realizing the protection, a variable optical attenuator functionality: It is thereby possible to limit the power of the user-defined optical signal 201 and/or of the optical initialization signal 205 such that the optical transmission functionality of the telecommunications network 100 and/or the functionalities of the optical safety and policy entity or functionality 210 is/are protected.

Especially, the variable optical attenuator functionality is or corresponds to a frequency-selective optical attenuator functionality, and especially is able to be adjusted in a frequency-dependent manner, resulting in an adjustable attenuation spectrum and different frequency-dependent attenuations for the user-defined optical signal and potentially other optical signals on the optical data transmission fiber 51'.

The variable optical attenuator functionality comprises a first variable optical attenuator device and at least a second variable optical attenuator device, wherein the first variable optical attenuator device allows for a comparatively fast attenuation or shutdown of the user-defined optical signal 201 and/or of the optical initialization signal 205 transmitted to the telecommunications network 100 and/or allows for a comparatively coarse optical attenuation in terms of spectral width and/or resolution, and wherein the second variable optical attenuator device corresponds to a more fine-granular variable optical attenuator device in terms of spectral width and/or resolution.

## Claims

1. Method for providing an optical data transmission-based connection between a first location (51), via at least one optical data transmission fiber (51'), to an optical data transmission functionality of a telecommunications network (100) in order to enable to feed or input a user-defined optical signal (201) and/or an optical initialization signal (205) to the optical data transmission fiber (51') and towards the optical data transmission functionality of the telecommunications network (100), wherein the optical data transmission functionality comprises an aggregation network (121),
wherein the optical data transmission fiber (51') is connected to an optical safety and policy entity or functionality (210) that connects the first location (51) to the aggregation network (121),
**characterized in that** the optical safety and policy entity or functionality (210) realizes a protection
-- of the optical transmission functionality of the telecommunications network (100) with regard to the aggregation network (121), and/or
-- of functionalities of the optical safety and policy entity or functionality (210),
wherein the method comprises the following steps:
-- in a first step, the user-defined optical signal (201) and/or the optical initialization signal (205) is fed or input, at the first location (51), to the optical data transmission fiber (51'),
-- in a second step, the optical transmission functionality of the telecommunications network (100) and/or the functionalities of the optical safety and policy entity or functionality (210) are protected by means of the optical safety and policy entity or functionality (210) attenuating the user-defined optical signal (201) and/or the optical initialization signal (205) received from the first location (51) via the optical data transmission fiber (51'), wherein the optical safety and policy entity or functionality (210) comprises, for realizing the protection, a variable optical attenuator functionality, wherein the power of the user-defined optical signal (201) and/or of the optical initialization signal (205) is limited, by the variable optical attenuator functionality, and thereby the optical transmission functionality of the telecommunications network (100) and/or the functionalities of the optical safety and policy entity or functionality (210) protected, wherein the variable optical attenuator functionality comprises a first variable optical attenuator device and at least a second variable optical attenuator device, wherein the first variable optical attenuator device allows for a comparatively fast attenuation or shutdown of the user-defined optical signal (201) and/or of the optical initialization signal (205) transmitted to the telecommunications network (100) and allows for a comparatively coarse optical attenuation in terms of spectral width and/or resolution, and wherein the second variable optical attenuator device corresponds to a more fine-granular variable optical attenuator device in terms of spectral width and/or resolution.

2. Method according to claim 1, wherein the optical safety and policy entity or functionality (210) realizes - besides the protection of the optical transmission functionality of the telecommunications network (100) and/or of functionalities of the optical safety and policy entity or functionality (210) - a policy decision functionality, and/or a policy enforcement functionality regarding the user-defined optical signal (201) and/or the optical initialization signal (205).

3. Method according to one of the preceding claims, wherein the variable optical attenuator functionality is or corresponds to a frequency-selective optical attenuator functionality, especially is able to be adjusted in a frequency-dependent manner, resulting in an adjustable attenuation spectrum and different frequency-dependent attenuations for the user-defined optical signal and potentially other optical signals on the optical data transmission fiber (51').

4. Method according to one of the preceding claims, wherein
-- the optical safety and policy entity or functionality (210) as well as
-- a further optical safety and policy entity or functionality (210'), the further optical safety and policy entity or functionality (210') linking a second location (52) via a second optical data transmission fiber (52') to the telecommunications network (100),
is used to initialize and/or to operate a communication or connectivity service between the first location (51) and at least the second location (52) based on optical data transmission of the user-defined optical signal (201) and/or the optical initialization signal (205),
wherein especially the telecommunications network (100) and its infrastructure is used to both
-- provide end-user communication services and/or IP connectivity to a multitude of end-users (50, 50') connected to an access network (120) of the telecommunications network (100), and
-- connect the first location (51) and the at least second location (52) by means of at least access network infrastructure and/or aggregation network infrastructure comprising a plurality of optical network nodes (123), wherein especially, between the first and second location (51, 52), the telecommunications network (100) comprises a transmission functionality regarding the backbone network (122) and aggregation network (121) and the access network (120) that is based exclusively or almost exclusively on optical data transmission.

5. Optical safety and policy entity or functionality (210) for providing an optical data transmission-based connection between a first location (51), via at least one optical data transmission fiber (51'), to an optical data transmission functionality of a telecommunications network (100), wherein the optical data transmission functionality comprises an aggregation network (121), wherein the optical data transmission fiber (51') is connected to the optical safety and policy entity or functionality (210) that connects the first location (51) to the aggregation network (121) optical data transmission functionality of the telecommunications network (100), wherein the optical safety and policy entity or functionality (210) is configured to receive a user-defined optical signal (201) and/or an optical initialization signal (205) fed or input to the optical data transmission fiber (51'),
**characterized in that** the optical safety and policy entity or functionality (210) is configured or comprises means to realize a protection
-- of the optical transmission functionality of the telecommunications network (100) with regard to the aggregation network (121), and/or
-- of functionalities of the optical safety and policy entity or functionality (210),
wherein the optical safety and policy entity or functionality (210) is configured such that the optical transmission functionality of the telecommunications network (100) and/or functionalities of the optical safety and policy entity or functionality (210) are protected by means of the optical safety and policy entity or functionality (210) attenuating the user-defined optical signal (201) and/or the optical initialization signal (205) received by the optical safety and policy entity or functionality (210) received from the first location (51) via the optical data transmission fiber (51'), wherein the optical safety and policy entity or functionality (210) comprises, for realizing the protection, a variable optical attenuator functionality, wherein the variable optical attenuator functionality is configured to limit the power of the user-defined optical signal (201) and/or of the optical initialization signal (205) and thereby protect the optical transmission functionality of the telecommunications network (100) and/or the functionalities of the optical safety and policy entity or functionality (210), wherein the variable optical attenuator functionality comprises a first variable optical attenuator device and at least a second variable optical attenuator device, wherein the first variable optical attenuator device allows for a comparatively fast attenuation or shutdown of the user-defined optical signal (201) and/or of the optical initialization signal (205) transmitted to the telecommunications network (100) and allows for a comparatively coarse optical attenuation in terms of spectral width and/or resolution, and wherein the second variable optical attenuator device corresponds to a more fine-granular variable optical attenuator device in terms of spectral width and/or resolution.

6. Optical safety and policy entity or functionality (210), according to claim 5, comprising a splitter entity or functionality (211) and an optical detection entity or functionality (212) as a first entry towards the telecommunications network (100) of the user-defined optical signal (201) and/or the optical initialization signal (205) being fed to the first optical data transmission fiber (51'), wherein by means of the splitter entity or functionality (211), a measuring signal of the optical power of the user-defined optical signal (201) and/or the optical initialization signal (205) is branched off towards the optical detection entity or functionality (212),
wherein especially by means of the optical detection entity or functionality (212), the branched off part of the user-defined optical signal (201) and/or of the optical initialization signal (205) is analyzed, especially by means of decomposing the branched off part of the user-defined optical signal (201) and/or of the optical initialization signal (205) into spectral components, especially by means of using an arrayed waveguide grating (215) or an alternative spectral filter as part of the optical safety and policy entity or functionality (210) or by means of using a channel indicator and/or a channel power measurement entity (216) as part of the optical safety and policy entity or functionality (210).

7. Optical safety and policy entity or functionality (210) according to claim 6,
wherein the optical safety and policy entity or functionality (210) comprises an optical policy enforcement entity or functionality (213), wherein the measurements performed and/or the analysis results obtained by the optical detection entity or functionality (212) are provided to the optical policy enforcement entity or functionality (213) that especially comprises a variable optical attenuator (217) able to limit the spectral position, the spectral width and/or the allowed signal amplitude of the user-defined optical signal (201), wherein especially from the measured optical parameters, service properties are calculated, especially the bandwidth or optical bandwidth or spectral width that the user-defined optical signal (201) and/or the optical initialization signal (205) is able to use,
wherein especially the service properties are related to the respective service level agreement, SLA.

8. Backbone network (122), aggregation network (121) or telecommunications network (100) for providing an optical data transmission-based connection between a first location (51), via at least one optical data transmission fiber (51'), to an optical data transmission functionality of a telecommunications network (100), the backbone network (122), aggregation network (121) or telecommunications network (100) comprising at least one optical safety and policy entity or functionality (210) according to one of claims 5 to 7.

9. System for providing an optical data transmission-based connection between a first location (51), via at least one optical data transmission fiber (51'), to an optical data transmission functionality of a telecommunications network (100), the system comprising at least one optical safety and policy entity or functionality (210) according to one of claims 5 to 7.

10. Program comprising a computer readable program code which, when executed on a computer on a optical safety and policy entity or functionality according to any of claims 5 to 7 (210), causes the optical safety and policy entity or functionality (210) to perform a method according one of claims 1 to 4.

11. Computer-readable medium comprising instructions which when executed on a computer on an optical safety and policy entity or functionality according to any of claims 5 to 7 (210), causes the optical safety and policy entity or functionality (210) to perform a method according one of claims 1 to 4.

## Patentansprüche

1. Verfahren zum Bereitstellen einer auf optischer Datenübertragung basierenden Verbindung zwischen einem ersten Standort (51) über mindestens eine optische Datenübertragungsfaser (51') zu einer optischen Datenübertragungsfunktionalität eines Telekommunikationsnetzes (100), um die Einspeisung oder Eingabe eines benutzerdefinierten optischen Signals (201) und/oder eines optischen Initialisierungssignals (205) in die optische Datenübertragungsfaser (51') und in Richtung der optischen Datenübertragungsfunktionalität des Telekommunikationsnetzes (100) zu ermöglichen, wobei die optische Datenübertragungsfunktionalität ein Aggregationsnetz (121) umfasst,
wobei die optische Datenübertragungsfaser (51') mit einer optischen Sicherheits- und Richtlinienentität oder -funktionalität (210) verbunden ist, die den ersten Standort (51) mit dem Aggregationsnetz (121) verbindet,
**dadurch gekennzeichnet, dass** die optische Sicherheits- und Richtlinienentität oder -funktionalität (210) einen Schutz realisiert für
- die optische Übertragungsfunktionalität des Telekommunikationsnetzes (100) in Bezug auf das Aggregationsnetz (121) und/oder
- die Funktionalitäten der optischen Sicherheits- und Richtlinienentität oder -funktionalität (210),
wobei das Verfahren die folgenden Schritte umfasst:
- in einem ersten Schritt werden das benutzerdefinierte optische Signal (201) und/oder das optische Initialisierungssignal (205) an dem ersten Standort (51) in die optische Datenübertragungsfaser (51') eingespeist oder eingegeben,
- in einem zweiten Schritt werden die optische Übertragungsfunktionalität des Telekommunikationsnetzes (100) und/oder die Funktionalitäten der optischen Sicherheits- und Richtlinienentität oder -funktionalität (210) dadurch geschützt, dass die optische Sicherheits- und Richtlinienentität oder -funktionalität (210) das benutzerdefinierte optische Signal (201) und/oder das optische Initialisierungssignal (205), die von dem ersten Standort (51) über die optische Datenübertragungsfaser (51') empfangen werden, abschwächt, wobei die optische Sicherheits- und Richtlinienentität oder -funktionalität (210) zum Realisieren des Schutzes eine variable optische Dämpfungsgliedfunktionalität umfasst, wobei die Leistung des benutzerdefinierten optischen Signals (201) und/oder des optischen Initialisierungssignals (205) durch die variable optische Dämpfungsgliedfunktionalität begrenzt werden, wobei die Leistung des benutzerdefinierten optischen Signals (201) und/oder des optischen Initialisierungssignals (205) durch die variable optische Dämpfungsgliedfunktionalität begrenzt werden und dadurch die optische Übertragungsfunktionalität des Telekommunikationsnetzes (100) und/oder die Funktionalitäten der optischen Sicherheits- und Richtlinienentität oder -funktionalität (210) geschützt werden, wobei die variable optische Dämpfungsgliedfunktionalität eine erste variable optische Dämpfungsgliedvorrichtung und mindestens eine zweite variable optische Dämpfungsgliedvorrichtung umfasst, wobei die erste variable optische Dämpfungsgliedvorrichtung eine vergleichsweise schnelle Dämpfung oder Abschaltung des benutzerdefinierten optischen Signals (201) und/oder des optischen Initialisierungssignals (205), die zu dem Telekommunikationsnetz (100) übertragen werden, erlaubt und eine vergleichsweise grobe optische Dämpfung in Bezug auf die spektrale Breite und/oder Auflösung erlaubt, und wobei die zweite variable optische Dämpfungsgliedvorrichtung einer feiner auflösenden variablen optischen Dämpfungsgliedvorrichtung in Bezug auf die spektrale Breite und/oder Auflösung entspricht.

2. Verfahren nach Anspruch 1, wobei die optische Sicherheits- und Richtlinienentität oder -funktionalität (210) - neben dem Schutz der optischen Übertragungsfunktionalität des Telekommunikationsnetzes (100) und/oder von Funktionalitäten der optischen Sicherheits- und Richtlinienentität oder -funktionalität (210) - eine Richtlinienentscheidungsfunktionalität und/oder eine Richtliniendurchsetzungsfunktionalität in Bezug auf das benutzerdefinierte optische Signal (201) und/oder das optische Initialisierungssignal (205) realisiert.

3. Verfahren nach einem der vorangehenden Ansprüche, wobei die variable optische Dämpfungsgliedfunktionalität eine frequenzselektive optische Dämpfungsgliedfunktionalität ist oder dieser entspricht, insbesondere in frequenzabhängiger Weise eingestellt werden kann, was zu einem einstellbaren Dämpfungsspektrum und unterschiedlichen frequenzabhängigen Dämpfungen für das benutzerdefinierte optische Signal und möglicherweise andere optische Signale in der optischen Datenübertragungsfaser (51') führt.

4. Verfahren nach einem der vorangehenden Ansprüche, wobei
- die optische Sicherheits- und Richtlinienentität oder -funktionalität (210) sowie
- eine weitere optische Sicherheits- und Richtlinienentität oder -funktionalität (210'), wobei die weitere optische Sicherheits- und Richtlinienentität oder -funktionalität (210') einen zweiten Standort (52) über eine zweite optische Datenübertragungsfaser (52') mit dem Telekommunikationsnetz (100) vernetzt,
verwendet werden, um einen Kommunikations- oder Konnektivitätsdienst zwischen dem ersten Standort (51) und mindestens dem zweiten Standort (52) auf der Grundlage der optischen Datenübertragung des benutzerdefinierten optischen Signals (201) und/oder des optischen Initialisierungssignals (205) zu initialisieren und/oder zu betreiben,
wobei insbesondere das Telekommunikationsnetz (100) und dessen Infrastruktur genutzt wird sowohl zum
- Bereitstellen von Endnutzer-Kommunikationsdiensten und/oder IP-Konnektivität für mehrere Endnutzer (50, 50'), die mit einem Zugangsnetz (120) des Telekommunikationsnetzes (100) verbunden sind, als auch
- Verbinden des ersten Standortes (51) und des mindestens zweiten Standortes (52) mittels mindestens einer Zugangsnetzinfrastruktur und/oder einer Aggregationsnetzinfrastruktur, die mehrere optische Netzknoten (123) umfassen, wobei insbesondere das Telekommunikationsnetz (100) zwischen dem ersten und dem zweiten Standort (51, 52) eine Übertragungsfunktionalität bezüglich des Backbone-Netzes (122) und Aggregationsnetzes (121) und des Zugangsnetzes (120) umfasst, die ausschließlich oder nahezu ausschließlich auf optischer Datenübertragung basiert.

5. Optische Sicherheits- und Richtlinienentität oder -funktionalität (210) zum Bereitstellen einer auf optischer Datenübertragung basierenden Verbindung zwischen einem ersten Standort (51) über mindestens eine optische Datenübertragungsfaser (51') zu einer optischen Datenübertragungsfunktionalität eines Telekommunikationsnetzes (100), wobei die optische Datenübertragungsfunktionalität ein Aggregationsnetz (121) umfasst, wobei die optische Datenübertragungsfaser (51') mit der optischen Sicherheits- und Richtlinienentität oder -funktionalität (210) verbunden ist, die den ersten Standort (51) mit der optischen Datenübertragungsfunktionalität des Aggregationsnetzes (121) des Telekommunikationsnetzes (100) verbindet, wobei die optische Sicherheits- und Richtlinienentität oder -funktionalität (210) dafür eingerichtet ist, ein benutzerdefiniertes optisches Signal (201) und/oder ein optisches Initialisierungssignal (205) zu empfangen, das in die optische Datenübertragungsfaser (51') eingespeist oder eingegeben wird,
**dadurch gekennzeichnet, dass** die optische Sicherheits- und Richtlinienentität oder -funktionalität (210) dafür eingerichtet ist oder Mittel umfasst, um einen Schutz zu realisieren für
- die optische Übertragungsfunktionalität des Telekommunikationsnetzes (100) in Bezug auf das Aggregationsnetz (121) und/oder
- die Funktionalitäten der optischen Sicherheits- und Richtlinienentität oder -funktionalität (210),
wobei die optische Sicherheits- und Richtlinienentität oder -funktionalität (210) so eingerichtet ist, dass die optische Übertragungsfunktionalität des Telekommunikationsnetzes (100) und/oder Funktionalitäten der optischen Sicherheits- und Richtlinienentität oder -funktionalität (210) dadurch geschützt werden, dass die optische Sicherheits- und Richtlinienentität oder -funktionalität (210) das benutzerdefinierte optische Signal (201) und/oder das optische Initialisierungssignal (205), die durch die optische Sicherheits- und Richtlinienentität oder -funktionalität (210) von dem ersten Standort (51) über die optische Datenübertragungsfaser (51') empfangen wurden, abschwächt, wobei die optische Sicherheits- und Richtlinienentität oder -funktionalität (210) zum Realisieren des Schutzes eine variable optische Dämpfungsgliedfunktionalität umfasst, wobei die variable optische Dämpfungsgliedfunktionalität dafür eingerichtet ist, die Leistung des benutzerdefinierten optischen Signals (201) und/oder des optischen Initialisierungssignals (205) zu begrenzen und dadurch die optische Übertragungsfunktionalität des Telekommunikationsnetzes (100) und/oder die Funktionalitäten der optischen Sicherheits- und Richtlinienentität oder -funktionalität (210) zu schützen, wobei die variable optische Dämpfungsgliedfunktionalität eine erste variable optische Dämpfungsgliedvorrichtung und mindestens eine zweite variable optische Dämpfungsgliedvorrichtung umfasst, wobei die erste variable optische Dämpfungsgliedvorrichtung eine vergleichsweise schnelle Dämpfung oder Abschaltung des benutzerdefinierten optischen Signals (201) und/oder des optischen Initialisierungssignals (205), die zu dem Telekommunikationsnetz (100) übertragen werden, erlaubt und eine vergleichsweise grobe optische Dämpfung in Bezug auf die spektrale Breite und/oder Auflösung erlaubt, und wobei die zweite variable optische Dämpfungsgliedvorrichtung einer feiner auflösenden variablen optischen Dämpfungsgliedvorrichtung in Bezug auf die spektrale Breite und/oder Auflösung entspricht.

6. Optische Sicherheits- und Richtlinienentität oder -funktionalität (210) nach Anspruch 5, umfassend eine Teilerentität oder -funktionalität (211) und eine optische Detektionsentität oder -funktionalität (212) als einen ersten Eingang - in Richtung des Telekommunikationsnetzes (100) - des benutzerdefinierten optischen Signals (201) und/oder des optischen Initialisierungssignals (205), die in die erste optische Datenübertragungsfaser (51') eingespeist werden, wobei mittels der Teilerentität oder -funktionalität (211) ein Messsignal der optischen Leistung des benutzerdefinierten optischen Signals (201) und/oder des optischen Initialisierungssignals (205) in Richtung der optischen Detektionsentität oder -funktionalität (212) abgezweigt wird,
wobei insbesondere mittels der optischen Detektionsentität oder -funktionalität (212) der abgezweigte Teil des benutzerdefinierten optischen Signals (201) und/oder des optischen Initialisierungssignals (205) analysiert wird, insbesondere mittels Zerlegen des abgezweigten Teils des benutzerdefinierten optischen Signals (201) und/oder des optischen Initialisierungssignals (205) in spektrale Komponenten, insbesondere mittels der Verwendung eines Zeilen-Wellenleiter-Gitters (215) oder eines alternativen Spektralfilters als Teil der optischen Sicherheits- und Richtlinienentität oder -funktionalität (210) oder mittels der Verwendung eines Kanalindikators und/oder einer Kanalleistungsmessungsentität (216) als Teil der optischen Sicherheits- und Richtlinienentität oder -funktionalität (210) .

7. Optische Sicherheits- und Richtlinienentität oder -funktionalität (210) nach Anspruch 6, wobei die optische Sicherheits- und Richtlinienentität oder -funktionalität (210) eine optische Richtliniendurchsetzungsentität oder -funktionalität (213) umfasst, wobei die durch die optische Detektionsentität oder -funktionalität (212) durchgeführten Messungen und/oder die durch die optische Detektionsentität oder -funktionalität (212) erhaltenen Analyseergebnisse an die optische Richtliniendurchsetzungsentität oder -funktionalität (213) übermittelt werden, die insbesondere ein variables optisches Dämpfungsglied (217) umfasst, das in der Lage ist, die spektrale Position, die spektrale Breite und/oder die zulässige Signalamplitude des benutzerdefinierten optischen Signals (201) zu begrenzen, wobei insbesondere aus den gemessenen optischen Parametern Diensteigenschaften berechnet werden, insbesondere die Bandbreite oder optische Bandbreite oder spektrale Breite, die das benutzerdefinierte optische Signal (201) und/oder das optische Initialisierungssignal (205) verwenden können, wobei sich insbesondere die Diensteigenschaften auf das jeweilige Service Level Agreement (SLA) beziehen.

8. Backbone-Netz (122), Aggregationsnetz (121) oder Telekommunikationsnetz (100) zum Bereitstellen einer auf optischer Datenübertragung basierenden Verbindung zwischen einem ersten Standort (51) über mindestens eine optische Datenübertragungsfaser (51') zu einer optischen Datenübertragungsfunktionalität eines Telekommunikationsnetzes (100), wobei das Backbone-Netz (122), das Aggregationsnetz (121) oder das Telekommunikationsnetz (100) mindestens eine optische Sicherheits- und Richtlinienentität oder -funktionalität (210) nach einem der Ansprüche 5 bis 7 umfasst.

9. System zum Bereitstellen einer auf optischer Datenübertragung basierenden Verbindung zwischen einem ersten Standort (51) über mindestens eine optische Datenübertragungsfaser (51') zu einer optischen Datenübertragungsfunktionalität eines Telekommunikationsnetzes (100), wobei das System mindestens eine optische Sicherheits- und Richtlinienentität oder -funktionalität (210) nach einem der Ansprüche 5 bis 7 umfasst.

10. Programm, umfassend einen computerlesbaren Programmcode, der, wenn er auf einem Computer in einer optischen Sicherheits- und Richtlinienentität oder -funktionalität nach einem der Ansprüche 5 bis 7 (210) ausgeführt wird, die optische Sicherheits- und Richtlinienentität oder -funktionalität (210) veranlasst, ein Verfahren nach einem der Ansprüche 1 bis 4 durchzuführen.

11. Computerlesbares Medium, umfassend Instruktionen, die, wenn sie auf einem Computer in einer optischen Sicherheits- und Richtlinienentität oder -funktionalität nach einem der Ansprüche 5 bis 7 (210) ausgeführt werden, die optische Sicherheits- und Richtlinienentität oder -funktionalität (210) veranlassen, ein Verfahren nach einem der Ansprüche 1 bis 4 durchzuführen.

## Revendications

1. Procédé permettant de fournir une connexion basée sur la transmission de données optique entre un premier emplacement (51), par l'intermédiaire d'au moins une fibre de transmission de données optique (51'), et une fonctionnalité de transmission de données optique d'un réseau de télécommunications (100) afin de permettre l'envoi ou l'entrée d'un signal optique défini par l'utilisateur (201) et/ou d'un signal optique d'initialisation (205) dans la fibre de transmission de données optique (51') et vers la fonctionnalité de transmission de données optique du réseau de télécommunications (100), dans lequel la fonctionnalité de transmission de données optique comprend un réseau d'agrégation (121),
dans lequel la fibre de transmission de données optique (51') est connectée à une entité ou fonctionnalité de sécurité et de politique optiques (210) qui relie le premier emplacement (51) au réseau d'agrégation (121),
**caractérisé en ce que** l'entité ou la fonctionnalité de sécurité et de politique optiques (210) réalise une protection
- de la fonctionnalité de transmission optique du réseau de télécommunications (100) par rapport au réseau d'agrégation (121), et/ou
- de fonctionnalités de l'entité ou de la fonctionnalité de sécurité et de politique optiques (210),
dans lequel le procédé comprend les étapes suivantes :
- dans une première étape, le signal optique défini par l'utilisateur (201) et/ou le signal optique d'initialisation (205) est envoyé ou entré, au niveau du premier emplacement (51), dans la fibre de transmission de données optique (51'),
- dans une deuxième étape, la fonctionnalité de transmission optique du réseau de télécommunications (100) et/ou les fonctionnalités de l'entité ou de la fonctionnalité de sécurité et de politique optiques (210) sont protégées au moyen de l'atténuation par l'entité ou de la fonctionnalité de sécurité et de politique optiques (210) du signal optique défini par l'utilisateur (201) et/ou du signal optique d'initialisation (205) reçus à partir du premier emplacement (51) par l'intermédiaire de la fibre de transmission de données optique (51'), dans lequel l'entité ou la fonctionnalité de sécurité et de politique optiques (210) comprend, pour réaliser la protection, une fonctionnalité d'atténuation optique variable, dans lequel la puissance du signal optique défini par l'utilisateur (201) et/ou du signal optique d'initialisation (205) est limitée par la fonctionnalité d'atténuation optique variable, ce qui protège la fonctionnalité de transmission optique du réseau de télécommunication (100) et/ou les fonctionnalités de l'entité ou de la fonctionnalité de sécurité et de politique optiques (210), dans lequel la fonctionnalité d'atténuation optique variable comprend un premier dispositif d'atténuation optique variable et au moins un deuxième dispositif d'atténuation optique variable, dans lequel le premier dispositif d'atténuation optique variable permet une atténuation ou une coupure relativement rapide du signal optique défini par l'utilisateur (201) et/ou du signal optique d'initialisation (205) transmis au réseau de télécommunications (100) et permet une atténuation optique comparativement grossière en termes de largeur et/ou de résolution spectrales, et dans lequel le deuxième dispositif d'atténuation optique variable correspond à un dispositif d'atténuation optique variable à granularité plus fine en termes de largeur et/ou de résolution spectrales.

2. Procédé selon la revendication 1, dans lequel l'entité ou la fonctionnalité de sécurité et de politique optiques (210) réalise - outre la protection de la fonctionnalité de transmission optique du réseau de télécommunications (100) et/ou des fonctionnalités de l'entité ou de la fonctionnalité de sécurité et de politique optiques (210) - une fonctionnalité de décision de politique, et/ou une fonctionnalité d'application de politique concernant le signal optique défini par l'utilisateur (201) et/ou le signal optique d'initialisation (205).

3. Procédé selon l'une des revendications précédentes, dans lequel la fonctionnalité d'atténuation optique variable est ou correspond à une fonctionnalité d'atténuation optique sélective en fréquence, et peut notamment être réglée en fonction de la fréquence, ce qui permet d'obtenir un spectre d'atténuation réglable et différentes atténuations en fonction de la fréquence pour le signal optique défini par l'utilisateur et éventuellement d'autres signaux optiques sur la fibre de transmission de données optique (51').

4. Procédé selon l'une des revendications précédentes, dans lequel
- l'entité ou la fonctionnalité de sécurité et de politique optiques (210) ainsi que
- une autre entité ou fonctionnalité de sécurité et de politique optiques (210'), l'autre entité ou fonctionnalité de sécurité et de politique optiques (210') reliant un deuxième emplacement (52) par l'intermédiaire d'une deuxième fibre de transmission de données optique (52') au réseau de télécommunications (100),
est utilisée pour initialiser et/ou exploiter un service de communication ou de connectivité entre le premier emplacement (51) et au moins le deuxième emplacement (52) sur la base de la transmission de données optique du signal optique défini par l'utilisateur (201) et/ou du signal optique d'initialisation (205),
dans lequel le réseau de télécommunications (100) et son infrastructure sont utilisés à la fois pour
- fournir des services de communication d'utilisateur final et/ou une connectivité IP à une multitude d'utilisateurs finaux (50, 50') connectés à un réseau d'accès (120) du réseau de télécommunications (100), et
- connecter le premier emplacement (51) et au moins le deuxième emplacement (52) au moyen d'au moins une infrastructure de réseau d'accès et/ou une infrastructure de réseau d'agrégation comprenant une pluralité de nœuds de réseau optique (123), dans lequel, en particulier, entre le premier et le deuxième emplacement (51, 52), le réseau de télécommunications (100) comprend une fonctionnalité de transmission concernant le réseau dorsal (122) et le réseau d'agrégation (121) et le réseau d'accès (120) qui est basée exclusivement ou presque exclusivement sur la transmission de données optique.

5. Entité ou fonctionnalité (210) de sécurité et de politique optiques permettant de fournir une connexion basée sur la transmission de données optique entre un premier emplacement (51), par l'intermédiaire d'au moins une fibre de transmission de données optique (51'), à une fonctionnalité de transmission de données optique d'un réseau de télécommunications (100), la fonctionnalité de transmission de données optique comprenant un réseau d'agrégation (121), dans lequel la fibre de transmission de données optique (51') est connectée à l'entité ou la fonctionnalité de sécurité et de politique optiques (210) qui relie le premier emplacement (51) à la fonctionnalité de transmission de données optique du réseau d'agrégation (121) du réseau de télécommunications (100), dans lequel l'entité ou la fonctionnalité de sécurité et de politique optiques (210) est configurée pour recevoir un signal optique défini par l'utilisateur (201) et/ou un signal optique d'initialisation (205) envoyé ou entré dans la fibre de transmission de données optique (51'),
**caractérisé en ce que** l'entité ou la fonctionnalité de sécurité et de politique optiques (210) est configurée ou comprend des moyens pour réaliser une protection
- de la fonctionnalité de transmission optique du réseau de télécommunications (100) par rapport au réseau d'agrégation (121), et/ou
- de fonctionnalités de l'entité ou de la fonctionnalité de sécurité et de politique optiques (210),
dans lequel l'entité ou la fonctionnalité de sécurité et de politique optiques (210) est configurée de manière à ce que la fonctionnalité de transmission optique du réseau de télécommunications (100) et/ou les fonctionnalités de l'entité ou de la fonctionnalité de sécurité et de politique optiques (210) soient protégées par l'atténuation par l'entité ou la fonctionnalité de sécurité et de politique optiques (210) du signal optique défini par l'utilisateur (201) et/ou du signal optique d'initialisation (205) reçus par l'entité ou la fonctionnalité de sécurité et de politique optiques (210) à partir du premier emplacement (51) par l'intermédiaire de la fibre de transmission de données optique (51'), dans lequel l'entité ou la fonctionnalité de sécurité et de politique optiques (210) comprend, pour réaliser la protection, une fonctionnalité d'atténuation optique variable, dans lequel la fonctionnalité d'atténuation optique variable est configurée pour limiter la puissance du signal optique défini par l'utilisateur (201) et/ou du signal optique d'initialisation (205) et ainsi protéger la fonctionnalité de transmission optique du réseau de télécommunications (100) et/ou les fonctionnalités de l'entité ou de la fonctionnalité de sécurité et de politique optiques (210), dans lequel la fonctionnalité d'atténuation optique variable comprend un premier dispositif d'atténuation optique variable et au moins un deuxième dispositif d'atténuation optique variable, dans lequel le premier dispositif d'atténuation optique variable permet une atténuation ou une coupure relativement rapide du signal optique défini par l'utilisateur (201) et/ou du signal optique d'initialisation (205) transmis au réseau de télécommunications (100) et permet une atténuation optique comparativement grossière en termes de largeur et/ou de résolution spectrales, et dans lequel le deuxième dispositif d'atténuation optique variable correspond à un dispositif d'atténuation optique variable à granularité plus fine en termes de largeur et/ou de résolution spectrales.

6. Entité ou fonctionnalité de sécurité et de politique optiques (210), selon la revendication 5, comprenant une entité ou fonctionnalité de séparation (211) et une entité ou fonctionnalité de détection optique (212) en tant que première entrée vers le réseau de télécommunications (100) du signal optique défini par l'utilisateur (201) et/ou du signal optique d'initialisation (205) envoyé à la première fibre de transmission de données optique (51'), dans lequel, au moyen de l'entité ou fonctionnalité de séparation (211), un signal de mesure de la puissance optique du signal optique défini par l'utilisateur (201) et/ou du signal optique d'initialisation (205) est dérivé vers l'entité ou fonctionnalité de détection optique (212), dans lequel, en particulier au moyen de l'entité ou de la fonctionnalité de détection optique (212), la partie dérivée du signal optique défini par l'utilisateur (201) et/ou du signal optique d'initialisation (205) est analysée, en particulier au moyen de la décomposition de la partie dérivée du signal optique défini par l'utilisateur (201) et/ou du signal optique d'initialisation (205) en composantes spectrales, en particulier par l'utilisation d'un réseau de guides d'ondes (215) ou d'un autre filtre spectral dans le cadre de l'entité ou de la fonctionnalité de sécurité et de politique optiques (210) ou par l'utilisation d'un indicateur de canal et/ou d'une entité de mesure de la puissance du canal (216) dans le cadre de l'entité ou de la fonctionnalité de sécurité et de politique optiques (210).

7. Entité ou fonctionnalité de sécurité et de politique optiques (210) selon la revendication 6,
dans lequel l'entité ou la fonctionnalité de sécurité et de politique optiques (210) comprend une entité ou une fonctionnalité d'application de politique optique (213), dans lequel les mesures effectuées et/ou les résultats d'analyse obtenus par l'entité ou la fonctionnalité de détection optique (212) sont fournis à l'entité ou à la fonctionnalité d'application de politique optique (213) qui comprend en particulier un atténuateur optique variable (217) capable de limiter la position spectrale, la largeur spectrale et/ou l'amplitude de signal autorisée du signal optique défini par l'utilisateur (201), dans lequel en particulier, à partir des paramètres optiques mesurés, des propriétés de service sont calculées, en particulier la largeur de bande ou la largeur de bande optique ou la largeur spectrale que le signal optique défini par l'utilisateur (201) et/ou le signal optique d'initialisation (205) peut utiliser,
dans lequel en particulier, les propriétés de service sont liées à l'accord de niveau de service, SLA, correspondant.

8. Réseau dorsal (122), réseau d'agrégation (121) ou réseau de télécommunication (100) pour fournir une connexion basée sur la transmission de données optique entre un premier emplacement (51), par l'intermédiaire d'au moins une fibre de transmission de données optique (51'), à une fonctionnalité de transmission de données optique d'un réseau de télécommunication (100), le réseau dorsal (122), le réseau d'agrégation (121) ou le réseau de télécommunication (100) comprenant au moins une entité ou fonctionnalité de sécurité et de politique optiques (210) selon l'une des revendications 5 à 7.

9. Système permettant de fournir une connexion basée sur la transmission de données optique entre un premier emplacement (51), par l'intermédiaire d'au moins une fibre de transmission de données optique (51'), et une fonctionnalité de transmission de données optique d'un réseau de télécommunications (100), le système comprenant au moins une entité ou fonctionnalité de sécurité et de politique optiques (210) selon l'une des revendications 5 à 7.

10. Programme comprenant un code de programme lisible par ordinateur qui, lorsqu'il est exécuté sur un ordinateur sur une entité ou une fonctionnalité de sécurité et de politique optiques (210) selon l'une quelconque des revendications 5 à 7, amène l'entité ou la fonctionnalité (210) de sécurité et de politique optiques à exécuter un procédé selon l'une des revendications 1 à 4.

11. Support lisible par ordinateur comprenant des instructions qui, lorsqu'elles sont exécutées par un ordinateur sur une entité ou une fonctionnalité de sécurité et de politique optiques (210) selon l'une quelconque des revendications 5 à 7, amènent l'entité ou la fonctionnalité de sécurité et de politique optiques (210) à exécuter un procédé selon l'une des revendications 1 à 4.
